Europäisches Patentamt

European Patent Office

Office européen des brevets

(19)

(11) Publication number: **0 266 449**

A1

(12) ## EUROPEAN PATENT APPLICATION

(21) Application number: **86115329.4**

(22) Date of filing: **05.11.86**

(51) Int. Cl.⁴: **B23D 47/04** , B65G 59/02

(43) Date of publication of application:
**11.05.88 Bulletin 88/19**

(84) Designated Contracting States:
**AT BE CH DE ES FR GB GR LI LU NL SE**

(71) Applicant: **GIBEN IMPIANTI S.p.A.**
**24, Via Garganelli**
**I-40065 Pianoro (Bologna)(IT)**

(72) Inventor: **Benuzzi, Gino**

**deceased(IT)**

(74) Representative: **Porsia, Dino, Dr. et al**
**c/o Succ. Ing. Fischetti & Weber Via Caffaro**
**3**
**I-16124 Genova(IT)**

(54) Feeding apparatus for sawing machine.

(57) A feeding apparatus for a sawing machine in
which the package of boards (P') that is cyclically
taken from the feeding stack, is deposited onto the
bed (5), of the lifting table, that is arranged over the
sawing machine workpiece table (B), so that it is not
added to the overall dimensions of the said work-
piece table (B), which is of such a size that it is fit
for allowing the movement of the packages, both in a
parallel and in a perpendicular orientation relatively
to the near cutting line. Whenever a package of
boards is formed on the bed (5) of the lifting table,
this bed is lowered to transfer the package onto the
sawing machine workpiece table (B). The section
(1') of the said workpiece table which lies under the
bed (5) of the lifting table, may be formed by a
stationary grate-like structure, and in this instance
the said bed (5) has a comb-like configuration, or it
may consist of a structure which is vertically mov-
able along its own guide means (8), so as to not
interfere with the overlying bed, whenever this bed
(5) is lowered, or it may consist of a second bed
arranged under the bed of the lifting table, parallelly
to the latter, and structurally interlocked thereto, so
that the two beds alternately perform the function of
prolonging the sawing machine workpiece table.

Fig. 1

"Feeding apparatus for sawing machine"

The invention refers to the machines and to the plants for sawing packages of boards of wood and/or of any other material. When with these machines there is associated a device for automatically feeding packages of boards previously arranged in a stack, and particularly in the instance in which the feeding is effected by means of suction devices operating on one board at a time, so that the time needed for forming a package of the required thickness is rather long, the package is usually formed in a parking station arranged in proximity of the sawing machine workpiece table, so that the package-forming time will not adversely affect the operation of the sawing machine.

When the apparatus for the automatic feeding of boards is to be associated with a sawing machine having a workpiece table that must be of such a size as to be capable to support packages of boards both in a parallel and perpendicular orientation relatively to the cutting line, so as to have the packages cut either longitudinally or transversely, the floor space occupied by the whole plant becomes considerable and, in certain cases, unacceptable.

The invention proposes a new solution for the automatic feeding of packages of boards, with no idle times, and which permits to entirely eliminate the floor space occupied by the parking table on which a package of boards is being cyclically formed.

The features of the invention and the advantages arising therefrom, will clearly appear in the following specification of some preferred embodiments thereof, shown in the annexed sheets of drawing, in which:

Figures 1 and 2 are side elevational views diagrammatically showing two different embodiments of the feeding apparatus according to the invention.

Figures 3, 4, 5, and 6 are side views showing a third embodiment of the feeding apparatus during as many operative steps.

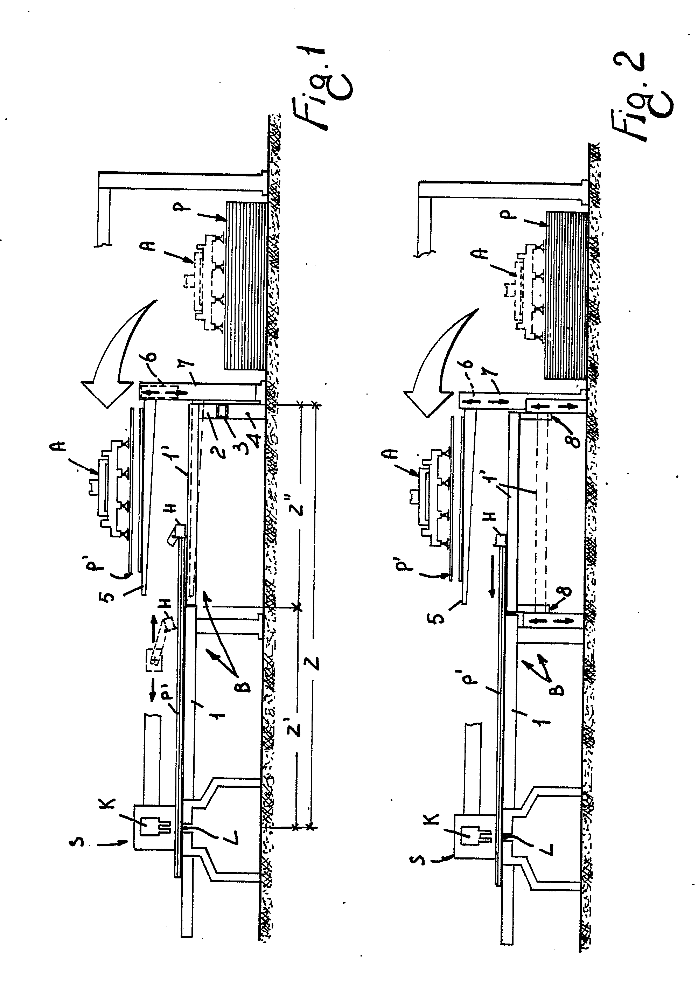

In Figure 1 by reference S there is designated the sawing machine, by reference L the cutting line, by reference K the pressure bar, and by reference B the horizontal workpiece table of the sawing machine, which lies opposite to the cutting line L. Reference P denotes the stack of boards, with their larger dimension oriented parallelly to L, while reference A denotes the known suction-operating means that take one board at a time from the top of the said stack P and deposit this board in a parking station provided for the forming of the package that will be then transferred onto the machine table B. The feeding device A and the possible means for supporting the stack P are not described here in detail, since they are known, and are not necessary for the understanding of the invention.

When with the sawing machine S both longitudinal and transversal cuts or either of the said cutting programs have to be made in packages of boards, it is then necessary that the length Z of the workpiece table B be substantially equal to the length of the said packages of boards. To limit the floor space occupied by the sawing plant having an automatic feeder of boards, the invention provides for the workpiece B to be formed by a section 1 having a length Z′ which is not shorter than the width of the boards to be cut, and being fixedly secured to the sawing machine frame, and having its even continuous upper face covered with a material for facilitating the sliding of the boards and for protecting them, and to be formed by a fixed extension 1′ which is complanar to 1 and consists of a plurality of suitably spaced apart parallel profiled members which are oriented perpendicularly to the cutting line L, and also have their upper face covered with a sliding protective material. The assembly 1-1′ has a length Z which is substantially equal to, or not much greater than the length of the packages of boards to be processed by the sawing machine S. It follows that also the length Z″ of the extension 1′ is not smaller than the width of the packages of boards. The profiled members forming the extension 1′ are, for example, fastened by one end to the frame of table 1, while at their other end they are provided with downwardly turned plates 2 which are integral with a common crosspiece 3 supported on the ground by feet 4. Over the extension 1′ the bed 5 of a lifting table is provided at the proper distance therefrom, parallelly thereto, and is formed by coplanar parallel profiled members having their upper face covered with a sliding protective material, just as for 1-1′, the said profiled members being hangingly attached to a common carriage 6 which through suitable drive means can be caused to slide along stationary vertical guides 7. The profiled members forming the bed 5 are of such a size and are so spaced apart from each other that whenever the said bed is lowered, they can pass through the slots between the profiled members forming the extension 1′. The bed 5 is used as a parking station, to form a board package P, while on table 1-1′ the previously fed package can be oriented in the transversal or in the longitudinal direction, so as to be subjected to longitudinal or transversal cuts, respectively.

2

Once the board package P' has been formed on bed 5, the said bed is lowered as shown by dash lines in Figure 1, so that the package P' will be deposited onto 1'. Nextly, the transfer is operated of pusher H having been previously uplifted, as shown by dash lines, from section 1 where it lies toward the beginning of extension 1', whereupon the said pusher is lowered and is positioned at the rear side of the package located on 1'. The pusher H then transfers the package onto section 1 of table B, and thereafter the bed 5 is lifted up, to get it ready for receiving a new package of boards, and to clear the extension 1'. When the fed package of boards has to be subjected to longitudinal cuts, this package is directly inserted into the sawing machine by the pusher H. Otherwise, when the package of boards has to be subjected to transversal cuts, this package is pushed by the pusher H beyond the cutting line L, where it is rotated by 90°, and then it is again transferred onto the workpiece table 1-1', also by the aid of pusher H which for this purpose is provided with gripper members. From the workpiece table the package is then gradually inserted into the sawing machine, to carry out the transversal cuts.

In order to use a bed 5 with a continuous surface, that guarantees an easier and safer sliding of the package of boards, and to use a pusher H with no lifting and lowering movements, just as in the preceding case, it is possible to adopt the solution shown in Figure 2. Instead of being attached to 1, and of being provided with feet 4 for its support on the ground, the extension 1' is connected to its own vertical guide means 8 and possibly to drive means, so that, when the bed 5 is lowered, the said extension is lowered down until the top of package P' carried by the said bed, comes to be below the path of movement of pusher H, which thus can be moved to the rear of the package. Then the bed 5 is lifted up and brought into coplanar relation with 1, so that the pusher H can transfer the package from 1' to 1. Once the package P' has been transferred, the bed 5 is returned into its up position shown in Figure 2, to receive a new package of boards, and the extension 1' is also returned into its up position, coplanar to 1. The vertical movement of component 1' may be carried out by suitable drive means, or it may take place owing to the interference of said component with the bed 5, in which case the extension 1' may, for example, be constantly urged upward by elastic means or by counterweights.

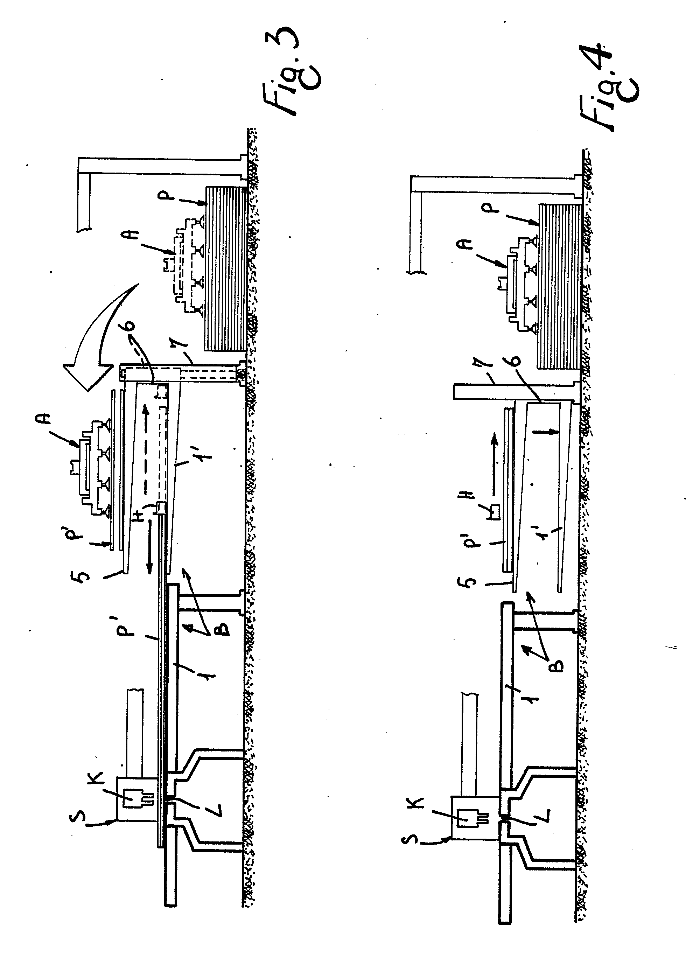

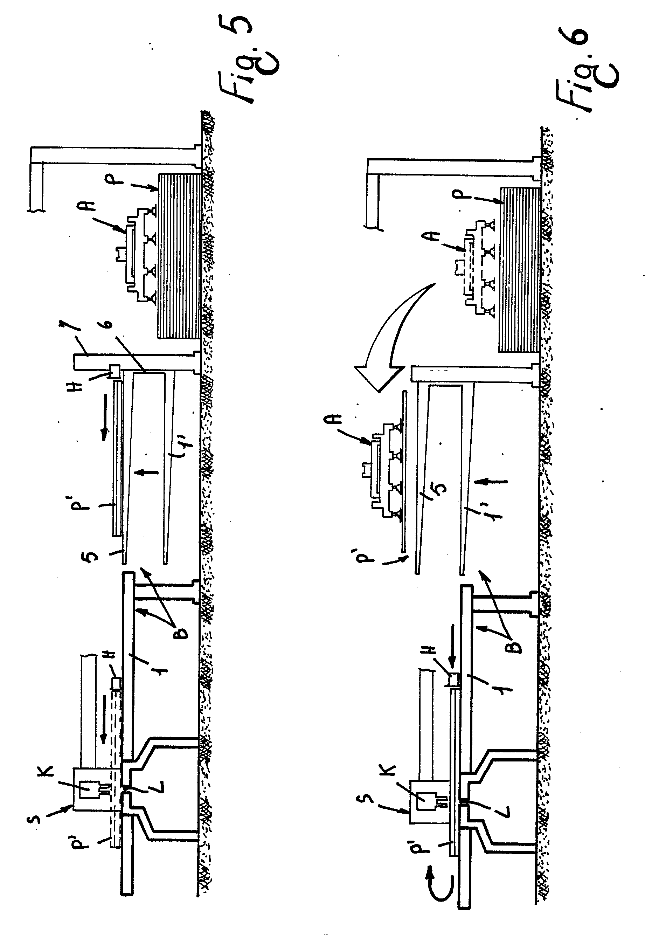

According to a different embodiment, shown in Figure 3, the extension 1' consists of a bed which is like the bed 5, is parallel thereto, and lies thereunder, and which is hangingly attached to the carriage 6 of said bed 5. When the bed 5 is in its up position as seen in Figure 3, to receive a package of boards from the feeding means A, the bed 1' is coplanar to the table 1 and can be used for supporting the preceding package of boards P' to be cut. Once the package P' has been formed on 5, while the pusher is over 1, the assembly 5-1' is lowered down as seen in Figure 4, until the top of package P' comes to be below the ideal plane containing the table 1. Then the pusher H is translated into its cycle-starting position (Figures 4 and 5), and thereafter the assembly 5-1' is automatically lifted up until the component 5 comes to be coplanar to 1. In this condition, the pusher H is activated and transfers the package P' from 5 to 1. Then the assembly 5-1' is lifted up as seen in Figure 6, so that the component 1' is brought into coplanar relation with 1, and the bed 5 is returned into its up position for receiving a new package of boards. Thus, the assembly 1-1' can be used for supporting a package P' of boards, both for having it cut longitudinally, and for having it cut transversally.

From the disclosure there have been omitted the means for vertically moving the carriage 6 of the lifting table with one or with two beds, and the several control and safety circuits, since the same are conceivable and can be easily made by those skilled in the art.

## Claims

1. An apparatus for automatically feeding to a sawing machine (S) packages of boards (P') previously arranged in a stack (P) which is located near to the workpiece table (B) of the sawing machine, and in which the larger dimension of the boards is oriented parallelly to the cutting line (L) of the sawing machine, characterized in that the workpiece table (B) facing the sawing machine, and on which the packages of boards have to be cyclically fed, has a lengthwise dimension (Z) that is substantially equal to, or is slightly longer than the length of these packages, so that they can be introduced into the sawing machine in a parallel or perpendicular orientation relatively to the cutting line; the preparation of the package of boards to be transferred onto the said workpiece table (B) being effected by suction means, or by any other suitable means, on the bed (5) of a lifting table that is located over the initial section (1') of the said workpiece table of the sawing machine, suitable means being provided so that, once a package has been formed, the bed (5) of the lifting table is lowered so as to permit the transfer of the package onto the workpiece table (1-B) of the sawing machine, under the action of a pusher (H), whereupon the bed (5) is returned into its lifted position, thus leaving the said workpiece table (B) in the condition fit for supporting the package.

2. Apparatus according to claim 1, in which the bed (5) of the lifting table has a comb-like configuration, and the underlying section (1') of the sawing machine workpiece table (B) has a grate-like configuration in the longitudinal direction, so that whenever the said bed is lowered, it can penetrate into the said section of the workpiece table, to transfer thereonto the prepared package (P')of boards; the pusher (H) of the sawing machine being provided with means that upon control can lift the same up from the workpiece table, so that this pusher can stride over the fed package, and can be positioned at the rear side thereof, and the said package will be then transferred thereby onto the section (1) of the said workpiece table, which is near to the sawing machine, whereupon the said bed (5) is returned into its lifted position to perform a new operative cycle, while the workpiece table of the sawing machine is left clear for transversally or longitudinally moving the fed package of boards.

3. Apparatus according to claim 1, characterized in that the bed of the lifting table may have a supporting continuous surface, and the section (1') of the sawing machine workpiece table (B), which lies thereunder, may consist of a bed supported by vertical guide means (8), and may be provided with means for shifting it in the said vertical direction, the whole being provided in such a manner that whenever the bed of the lifting table is lowered, the underlying bed will be also lowered, so that the upper bed can be at first positioned with the top of the package lying below the path of movement of pusher (H), that can be thus positioned at the rear side of said package, whereupon the upper bed (5) is lifted up and brought into coplanar relation with the sawing machine workpiece table (1), so as to permit the transfer of said package thereonto, whereafter that the said upper bed (5) is returned into its lifted position for receiving a new package, while the lower bed (1') is returned into the condition in which it is into coplanar alignment with the stationary section (1) of the workpiece table, so as to prolong the same.

4. Apparatus according to claim 3, in which the lower bed (1') is attached to the same carriage (6) that supports the upper bed (5), so as to be moved simultaneuosly therewith.

Fig. 1

Fig. 2

Fig. 3

Fig. 4

0 266 449

Fig. 5

Fig. 6

0 266 449

# EUROPEAN SEARCH REPORT

Application number

EP 86 11 5329

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 820 103 (SCHELLING & CO.)<br>* Whole document *<br><br>--- | 1-4 | B 23 D 47/04<br>B 65 G 59/02 |
| Y | DE-A-1 921 585 (MASCHINENFABRIK ESTERER AG)<br>* Claims 8-15; figures 1,2 *<br><br>--- | 1-4 | |
| Y | FR-A-2 023 830 (G. BENUZZI)<br>* Whole document, in particular claims 15-18; figures 6,7 *<br><br>--- | 1-4 | |
| A | CH-A- 489 309 (VON ARX AG)<br>* Whole document *<br><br>--- | 1-4 | |
| A | DE-A-2 740 674 (GIBEN INPIANTI S.p.A.)<br>* Page 20, lines 12-13; figures 7,8 *<br><br>----- | | TECHNICAL FIELDS SEARCHED (Int. Cl.4)<br><br>B 23 D<br>B 27 B<br>B 65 G |

The present search report has been drawn up for all claims

| Place of search | Date of completion of the search | Examiner |
|---|---|---|
| THE HAGUE | 07-07-1987 | MOET H.J.K. |